# EUROPEAN PATENT APPLICATION

(11) **EP 1 371 460 A1**
(43) Date of publication of application: **17.12.2003**
(21) Application number: 01998164.6
(22) Date of filing: 19.11.2001
(51) Int. Cl.: B25J 17/00

(54) **MANIPULATOR**

(30) Priority: 22.11.2000 JP 2000356795
(71) Applicant: TMSUK Co., Ltd., Kitakyushu-shi, Fukuoka 803-0851 (JP)
(72) Inventor: BABA, Katsuyuki, Tmsuk Co., Ltd., Kitakyushu-shi, Fukuoka 803-0851 (JP); ION, Shigeaki, Tmsuk Co., Ltd., Kitakyushu-shi, Fukuoka 803-0851 (JP); TAKAMOTO,Yoichi, Tmsuk Co., Ltd., Kitakyushu-shi, Fukuoka 803-0851 (JP)
(74) Representative: HOFFMANN EITLE
(86) International application number: JP0110077
(87) International publication number: WO02043931

(57) **Abstract**

An object of the invention is to provide a manipulator that is excellent in controllability since respective rotating portions are rotated by respective double-acting type cylinders, excellent in safety, and does not adversely impact the environment since water is used as its operating fluid. The manipulator disposed on a supporting structure such as a robot fuselage and a cradle, etc., at a work site in a factory, which comprises an arm member, a fixing shaft fixed on the arm member, another arm member for axially supporting the fixing shaft, and a double-acting hydraulic pressure drive type cylinder in which a cylinder portion is disposed at one arm member, and a piston portion is disposed at another arm member, or a double-acting hydraulic pressure drive type cylinder in which a cylinder portion is disposed at another arm member and a piston portion is disposed at one arm member.

## Description

### Field of the Invention

The present invention relates to a manipulator disposed at a supporting structure such as a robot fuselage.

### BACKGROUND OF THE INVENTION

Recently, unmanned operation and/or work has been promoted in a place of high risk such as a power generation station, factory, etc. In line therewith, various types of manipulators have been developed, which carry out operations and work instead of workers.

As prior art manipulators, there are several types which are a drive portion built-in type in which a drive portion such as a motor is incorporated in respective joints, a wire rope type in which a plurality of joints are driven by a drive portion such as a single motor by routing wire ropes between the joints and single motor, and an oil hydraulic cylinder type or a pneumatic cylinder type in which respective joints are driven by using an oil hydraulic cylinder or a pneumatic cylinder, etc.

However, the above-described conventional art manipulators have the following problems.
(1) The entire weight of the drive portion built-in type manipulator is increased since the drive portion is incorporated in respective joints, and it becomes necessary to increase the torque of a member (for example, a motor located at the base part of the manipulator and a motor for moving the entire apparatus) which supports the manipulator. Therefore, there is a problem in that the weight of the entire apparatus is accordingly increased, productivity is lowered, and work efficiency is worsened.
(2) Since, in the wire rope type manipulator, a plurality of joints are interlockingly actuated by driving a drive portion such as a single motor, it is difficult to carry out complicated actions, wherein there is a problem in that work efficiency is not sufficient.
(3) Since, in the wire rope type manipulator, the weight of an object which can be handled by the manipulator depends on the tensile strength of the wire rope, no object having heavy weight can be handled in comparison with an object which can be handled by a cylinder drive type, wherein there is a problem that work efficiency is not sufficient.
(4) Since the operating fluid is oil in the oil hydraulic . cylinder type manipulator, there is a problem in that such a harmful substance may adversely impact the environment or there is a possibility for causing a fire if the operating fluid leaks.
(5) Since the operating fluid is air in the pneumatic cylinder type manipulator, the cubic fluctuation is larger in comparison with liquid, and there is a problem in that it is difficult for joints to be retained at a prescribed position.

The present invention solves the above-described problems incidental to the conventional manipulators, and it is therefore an object of the invention to provide a manipulator that is excellent in controllability since respective rotating portions are driven by respective double-acting type cylinders, excellent in safety, and does not adversely impact the environment since water is used as its operating fluid.

### Disclosure of the Invention

In order to solve the above-described object, a manipulator according to the present invention includes the following constructions.

A manipulator according to a first aspect of the invention is a manipulator disposed on a supporting structure such as a robot fuselage and a cradle, etc., at a work site in a factory, which comprises (a) an arm member, (b) a fixing shaft fixed on the arm member, (c) another arm member for axially supporting the fixing shaft, and (d) a double-acting hydraulic pressure drive type cylinder in which a cylinder portion is disposed at one arm member, and a piston portion is disposed at another arm member, or a double-acting hydraulic pressure drive type cylinder in which a cylinder portion is disposed at another arm member and a piston portion is disposed at one arm member.

With such a construction, the following actions can be brought about.
(1) By telescopic motions of the double-acting type cylinder, the piston portion of the double-acting type cylinder presses and tracts one arm member and the arm member rotates centering around the fixing shaft of the arm member. Therefore, by adjusting the telescopic motions of the double-acting type cylinder, it is possible to adjust the angle of the arm member with respect to another arm member.
(2) Since the operating fluid is water, it is difficult for a fire to occur, and safety is increased in comparison with an oil hydraulic pressure drive type.
(3) Since the operating fluid is water, water does not adversely impact the peripheral environment even if the operating fluid leaks. Also, where the operating fluid is disposed, it does not contaminate the environment, wherein safety is further increased.
(4) Since the operating fluid is water, a greater output than in a case of the pneumatic drive type can be obtained.

Here, various member types such as those in which two plate-shaped members are disposed in parallel to each other and both end portions are coupled to each other, hollow square pillar-shaped members, and rod-shaped members, etc., may be used as the arm members.

A manipulator according to a second aspect of the present invention is a manipulator disposed on a supporting structure such as a robot fuselage and a cradle, etc., at a work site in a factory, which comprises (a) an arm member, (b) a fixing shaft fixed on the arm member, (c) another arm member for axially supporting the fixing shaft, (d) a rotation side gear fixed on the fixing shaft, (e) a driven side gear rotatably disposed on the arm member or another arm member, (f) an endless chain wound on the rotation side gear and driven side gear, and (g) a double-acting type cylinder in which a piston portion is fixed on the chain and a cylinder portion is disposed at either the arm member or another arm member, where the driven side gear is disposed.

With such a construction, the following actions can be brought about.
(1) By telescopic motions of the double-acting type cylinder, the chain rotates, the rotation side gear which is in engagement therewith rotates, and the fixing shaft having the rotation side gear fixed thereon rotates. In line therewith, since one arm member rotates centering around the fixing shaft, it is possible to adjust the angle of the arm member with respect to another arm member by adjusting the telescopic motion of the double-acting type cylinder.
(2) Since the arm member is caused to rotate via the chain, it is possible to adjust the torque in accordance with the weight of the arm member by adjusting the diameter of the gear.

Here, an oil hydraulic pressure drive type cylinder, a pneumatic drive type cylinder, and a hydraulic pressure drive type cylinder, etc., may be used as the double-acting type cylinder.

Also, various member types such as those in which two plate-shaped members are disposed in parallel to each other and both end portions are coupled to each other, hollow square pillar-shaped members, and rod-shaped members, etc., may be used as the arm members.

A manipulator according to a third aspect of the invention is a manipulator disposed on a supporting structure such as a robot fuselage and a cradle, etc., at a work s ite in a factory, which comprises (a) an arm member, (b) a fixing shaft fixed on the arm member, (c) another arm member for axially supporting the fixing shaft, (d) a fixing shaft side worm gear fixed on the fixing shaft, (e) a rotation shaft axially supported perpendicular to the axial line direction of the fixing shaft at another arm member, (f) a rotation shaft side worm gear fixed on the rotation shaft and engaged with the fixing shaft side worm gear fixed on the rotation shaft, (g) a rotation side gear, (h) a driven side gear rotatably disposed on another arm member, (i) an endless chain wound on the rotation side gear and driven side gear, and (j) a double-acting type cylinder in which a piston portion is fixed on the chain and a cylinder portion is disposed at another arm member.

With such a construction, the following actions can be brought about.
(1) By telescopic motions of the double-acting type cylinder, the chain rotates, the rotation side gear engaged therewith rotates, the rotation shaft having the rotation gear side fixed thereon and the rotation shaft side worm gear fixed on the rotation shaft rotate, the fixing shaft side worm gear engaged with the rotation shaft side worm gear rotates, and the fixing shaft having the fixing shaft side worm gear fixed thereon rotates. In line therewith, since one arm member rotates centering around the fixing shaft, it is possible to adjust the angle of the arm member with respect to another arm member by adjusting the telescopic motion of the double-acting type cylinder.
(2) By adjusting the diameter of the gear since one arm member is caused to rotate via the chain, it is possible to adjust the torque in accordance with the weight of the arm member.
(3) Since one arm member is caused to rotate via the worm gear, a drive force can be transmitted by varying the rotation direction of the chain.

Here, an oil hydraulic pressure drive type cylinder, a pneumatic drive type cylinder, and a hydraulic pressure drive type cylinder, etc., may be used as the double-acting type cylinder.

Also, various member types such as those in which two plate-shaped members are disposed in parallel to each other and both end portions are coupled to each other, hollow square pillar-shaped members, and rod-shaped members, etc., may be used as the arm members.

Further, a worm and a worm wheel, and a bevel gear such as a pair of miter gears, etc., may be used as the fixing shaft side worm gear and rotation shaft side worm gear.

A manipulator according toa fourth aspect of the invention is the manipulator as set forth in the second aspect or the third aspect, in which the double-acting type cylinder is of a hydraulic pressure drive type.

With such a construction, the following actions can be brought about in addition to those described in the second or third aspect.
(1) Since the operating fluid is water, it is difficult for a fire to occur, and safety is increased in comparison with the oil hydraulic pressure drive type cylinder.
(2) Since the operating fluid is water, water does not adversely impact the peripheral environment even if the operating fluid leaks. Also, where the operating fluid is disposed, it does not contaminate the environment, wherein safety is further increased.
(3) Since the operating fluid is water, a greater output than in the case of the pneumatic drive type can be obtained.

A manipulator according to a fifth aspect of the invention is the manipulator as set forth in any one of the first aspect through the fourth aspect, wherein the cylinder portion of the double-acting type cylinder is rotatably disposed at one arm member or another arm member.

With such a construction, the following actions can be brought about in addition to the actions of any one of the first aspect through the fourth aspect.
(1) Since the double-acting type cylinder is caused to rotate in accordance with telescopic motions, the distance to the chain and the arm member, at which the piston portion is disposed, can be automatically adjusted, wherein since the locating position of the double-acting type cylinder is not limited, the degree of freedom in designing manipulators can be expanded.

### BRIEF DESCRIPTION OF THE DRAWINGS

Fig. 1 is a front elevational view of the major parts of a manipulator according to Embodiment 1 of the invention;
Fig. 2 is a side elevational view of the major parts of the manipulator according to Embodiment 1 of the invention;
Fig. 3 is an enlarged view of the major parts of H portion in Fig. 1;
Fig. 4 is an enlarged view of the major parts of H portion in Fig. 2;
Fig. 5 is an enlarged view of the major parts of M portion in Fig. 1;
Fig. 6 is an enlarged view of the major parts of M portion in Fig. 2;
Fig. 7 is an enlarged view of the major parts of L portion in Fig. 1;
Fig. 8 is an enlarged view of the major parts of L portion in Fig. 2;
Fig. 9 is a hydraulic circuit diagram of the manipulator according to Embodiment 1 of the invention; and
Fig. 10 is a hydraulic circuit diagram of the manipulator according to Embodiment 2 of the invention.

### Best Mode for Carrying out the Invention

### (Embodiment 1)

Hereinafter, a description is given of a manipulator according to Embodiment 1 of the invention with reference to the accompanying drawings.

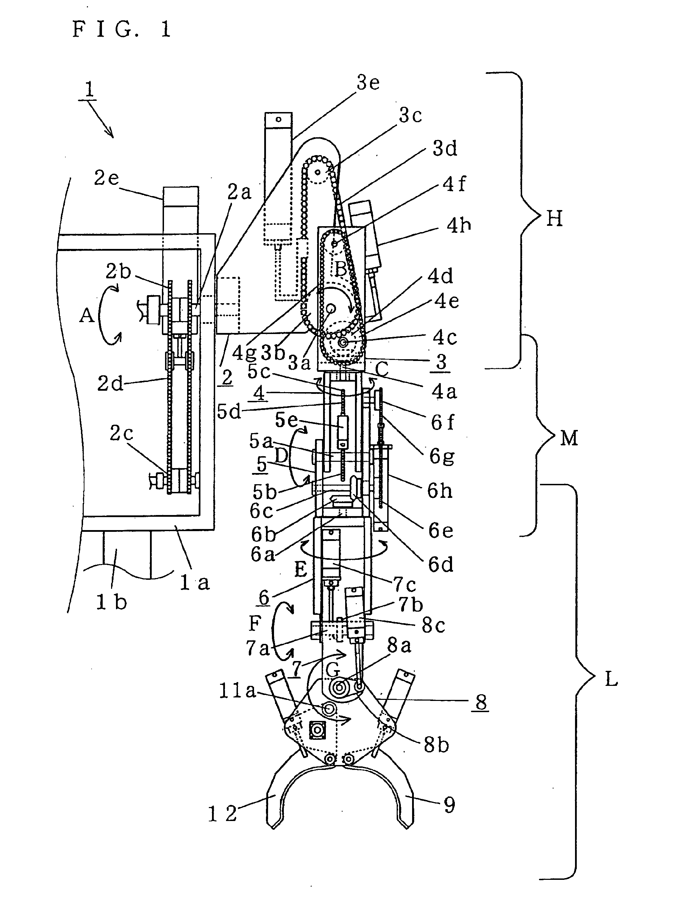

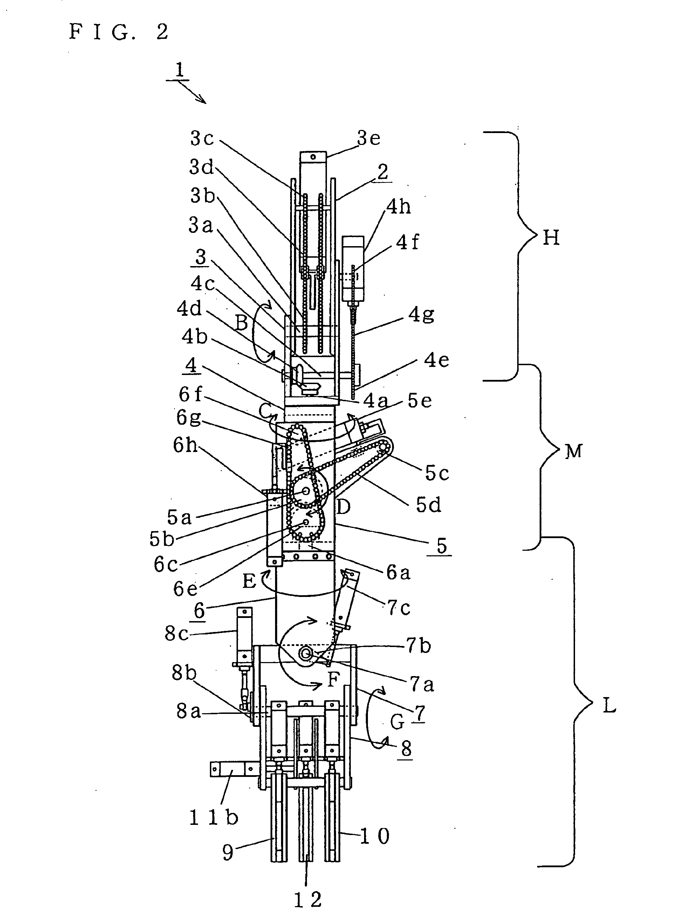

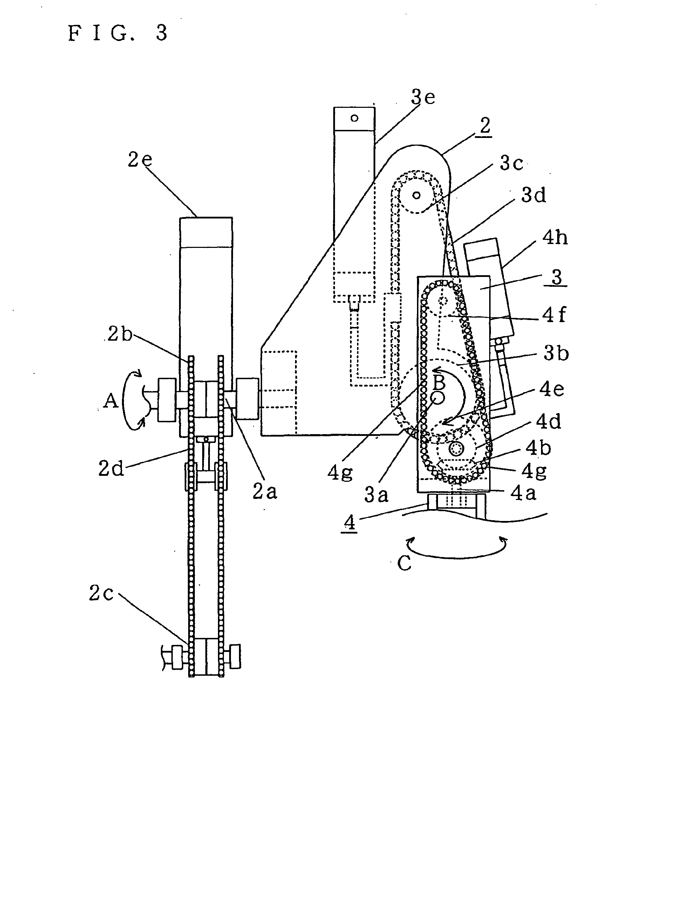

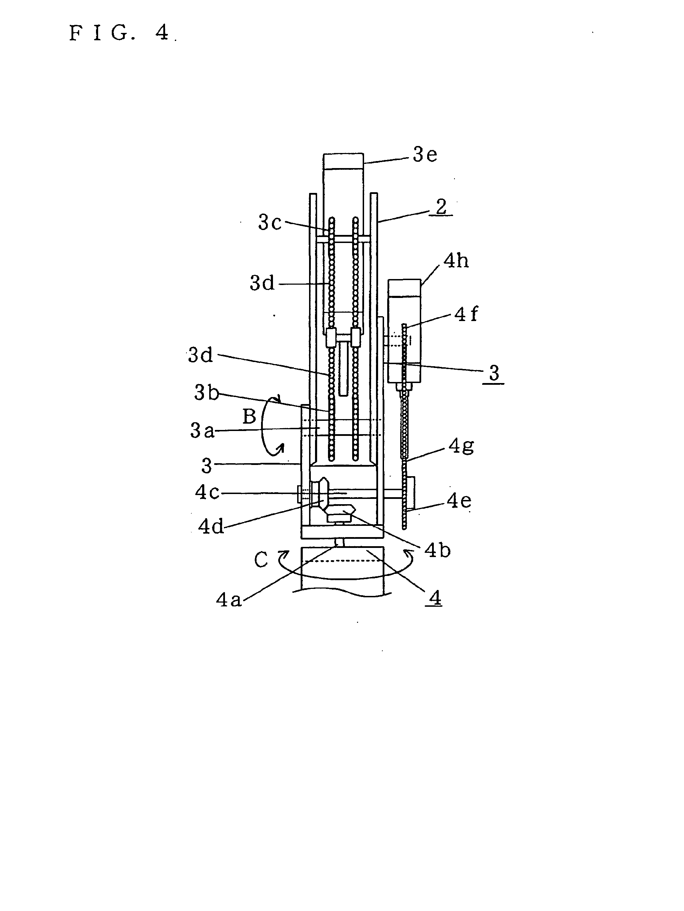

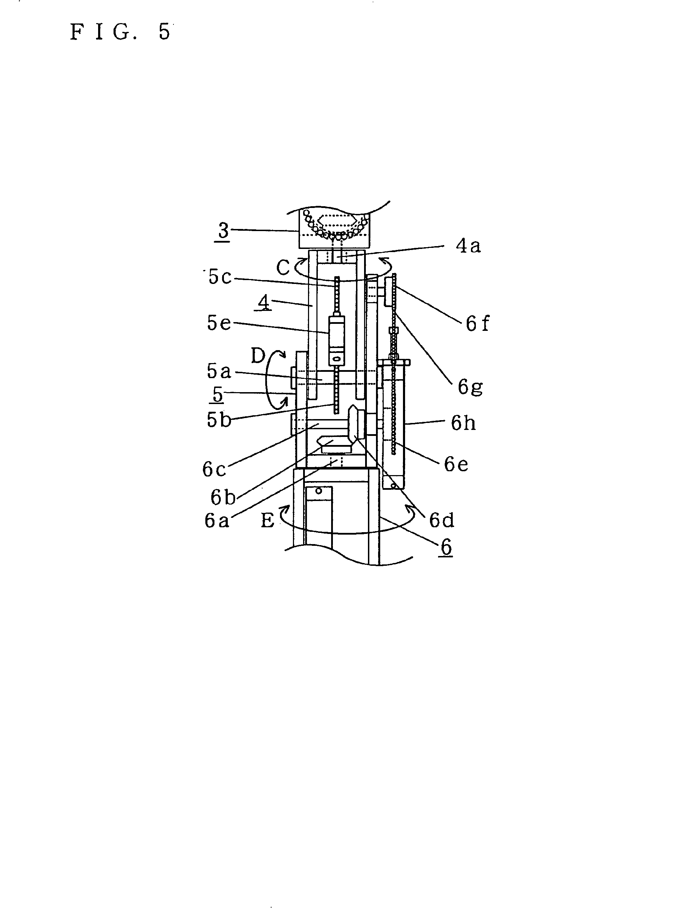

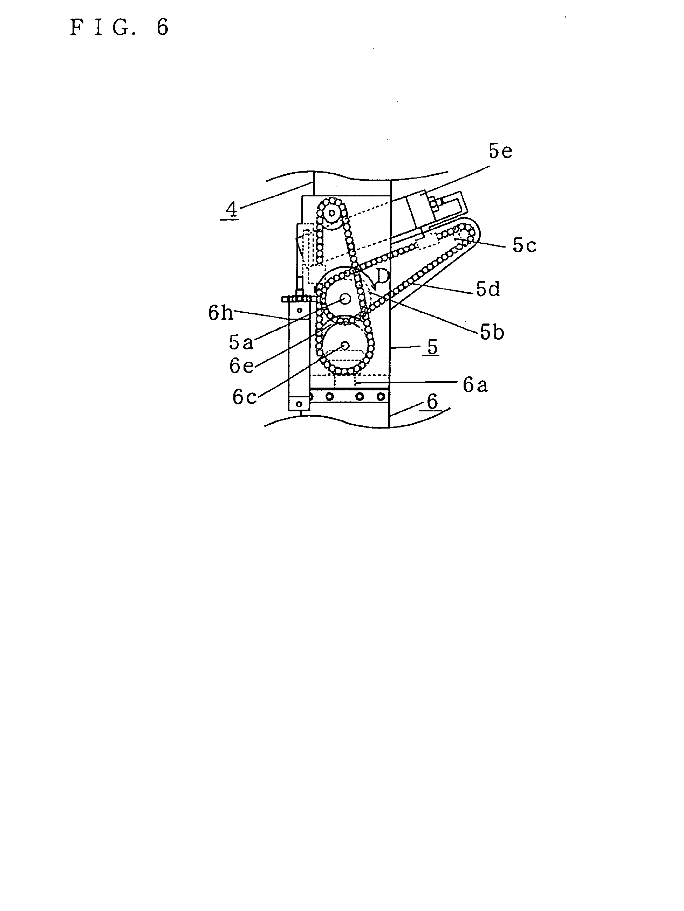

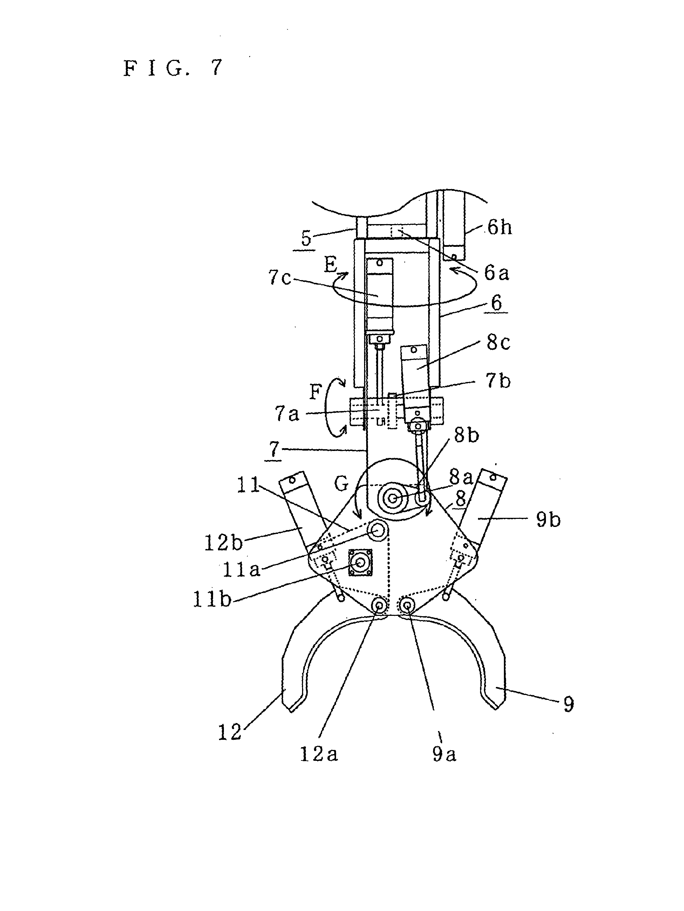

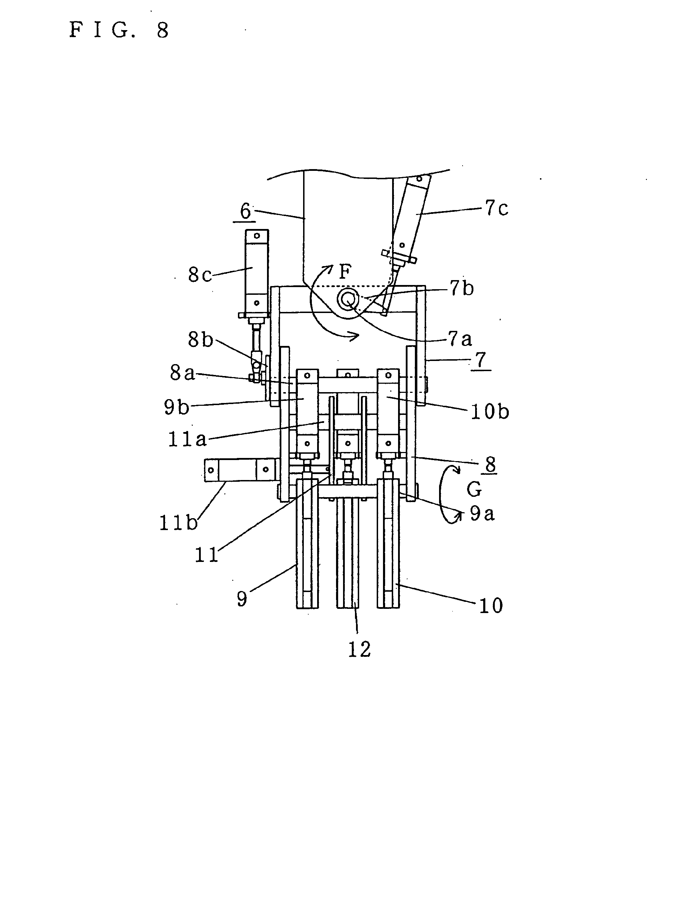

Fig. 1 is a front elevational view of the major parts of a manipulator according to Embodiment 1 of the invention. Fig. 2 is a side elevational view thereof. Fig. 3 is an enlarged view of the major parts of H portion in Fig. 1. Fig. 4 is an enlarged view of the major parts of H portion in Fig. 2. Fig. 5 is an enlarged view of the major parts of M portion in Fig. 1. Fig. 6 is an enlarged view of the major parts of M portion in Fig. 2. Fig. 7 is an enlarged view of the major parts of L portion in Fig. 1. Fig. 8 is an enlarged view of the major parts of L portion in Fig. 2.

In Fig. 1 through Fig. 8, reference number 1 denotes a manipulator according to Embodiment 1 of the invention. A supporting structure 1a constitutes a robot fuselage, etc. A shaft portion 1 axially supports the supporting structure 1a rotatably in the left and right directions or in a fixed state. Reference number 2 denotes a shoulder arm member in which a fixing shaft 2a is axially supported on the supporting structure 1a rotatably in the direction of arrow A. A shoulder rotation side gear 2b is fixed at the tip end portion of the fixing shaft 2a. A shoulder driven side gear 2c is rotatably disposed at the supporting structure 1a of the robot fuselage, etc. An endless chain 2d is wound on the shoulder rotation side gear 2b and shoulder driven side gear 2c. A shoulder double-acting type cylinder 2e of a hydraulic pressure drive type has a cylinder portion disposed at the supporting structure (not illustrated) of the robot fuselage, etc., and the tips end side of a piston portion fixed at the chain 2d.

By telescopic motions of the shoulder double-acting type cylinder 2e, the chain 2d rotates, which is fixed at the piston portion of the shoulder double-acting type cylinder 2e, and the shoulder rotation side gear 2b is caused to rotate in engagement with the chain 2d. In line therewith, the shoulder arm member 2 in which the shoulder rotation side gear 2b is fixed at the fixing shaft 2a is caused to rotate in the direction of arrow A.

As shown in Fig. 1 through Fig. 4, an upper arm member 3 has a fixing shaft 3a axially supported on the front and rear walls of the shoulder member 2 rotatably in the direction of arrow B. An upper arm rotation side gear 3b is fixed on the fixing shaft 3a in the upper arm member 3. An upper arm driven side gear 3c is rotatably disposed in the upper part side of the shoulder arm member 2. An endless chain 3d is wound on the upper arm rotation side gear 3b and the upper arm driven side gear 3c. An upper arm double-acting type cylinder 3e of a hydraulic pressure drive type has a cylinder portion disposed inside the shoulder arm member 2 and the tip end side of a piston portion fixed at the chain 3d.

By telescopic motions of the upper arm double-acting type cylinder 3e, the chain 3d, which is fixed at the piston portion of the upper arm double-acting type cylinder 3e, is caused to rotate, and the upper arm rotation side gear 3b engaged therewith accordingly rotates. Thereby, the upper arm member 3 in which the upper arm rotation side gear 3b is fixed at the fixing shaft 3a is caused to rotate in the direction of arrow B.

As shown in Fig. 1 through Fig. 4, a first middle arm member 4 has a fixing shaft 4a fixed at the upper part thereof, and the fixing shaft 4a is axially supported at the lower part of the upper arm member 3 rotatably in the direction of arrow C. The fixing shaft side worm gear 4b is fixed at the upper end portion of the fixing shaft 4a. A rotation shaft 4c is axially supported at the lower part of the upper arm member 3 rotatably. A rotation shaft side worm gear 4d is fixed on the rotation shaft 4c in the upper arm member 3 and engaged with the fixing shaft side worm gear 4b. The first middle arm rotation side gear 4e is fixed on the rotation shaft 4c rearward of the upper arm member 3. The first middle arm driven side gear 4f is rotatably disposed rearward of the upper part of the upper arm member 3. An endless chain 4g is wound on the first middle arm rotation side gear 4e and the first middle arm driven side gear 4f. The first middle arm double-acting type cylinder 4h of a hydraulic pressure drive type has a cylinder portion disposed on the upper arm member 3 and has the tip end side of a piston portion fixed at the chain 4g.

By telescopic motions of the first middle arm double-acting type cylinder 4h, the chain 4g is caused to rotate, which is fixed at the piston portion of the first middle arm double-acting type cylinder 4h, and the first middle arm rotation side gear 4e engaged therewith accordingly rotates, whereby the rotation shaft 4c on which the first middle arm rotation side gear 4e is fixed is caused to rotate, the rotation shaft side worm gear 4d fixed on the rotation shaft 4c rotates, and the fixing shaft side worm gear 4b engaged with the rotation shaft side worm gear 4d rotates. In line therewith, the first middle arm member 4 having the fixing shaft side worm gear 4b fixed on the fixing shaft 4a is caused to rotate in the direction of arrow C.

As shown in Fig. 1, Fig. 2, Fig. 5, and Fig. 6, a second middle arm member 5 has a fixing shaft 5a fixed at the upper part thereof, and the fixing shaft 5a is axially supported at the lower part of the first middle arm member 4 rotatably in the direction of arrow D. The second middle arm rotation side gear 5b is fixed on the fixing shaft 5a in the second middle arm member 5. The second middle arm driven side gear 5c is rotatably disposed rearward of the first middle arm member 4. A chain 5d is wound on the second middle arm rotation side gear 5b and the second middle arm driven side gear 5c. The second middle arm double-acting type cylinder 5e of a hydraulic pressure drive type has a cylinder portion disposed in the first middle arm member 4 and has the tip end side of a piston portion fixed at the chain 5d.

By telescopic motions of the second middle arm double-acting type cylinder 5e, the chain 5d rotates, on which the second middle arm double-acting type cylinder 5e is fixed. The second middle arm rotation side gear 5b engaged therewith is caused to rotate. In line therewith, the second middle arm member 5 having the second middle arm rotation side gear 5b fixed on the fixing shaft 5a is caused to rotate in the direction of arrow D.

As shown in Fig. 1, Fig. 2, Fig. 5 and Fig. 6, a lower arm member 6 has a fixing shaft 6a fixed at the upper part thereof, and the fixing shaft 6a is axially supported at the lower part of the second middle arm member 5 rotatably in the direction of arrow E. A fixing shaft side worm gear 6b is fixed at the upper end portion of the fixing shaft 6a. A rotation shaft 6c is axially supported at the lower part of the second middle arm member 5 rotatably. A rotation shaft side worm gear 6d is fixed on the rotation shaft 6c in the second middle arm member 5 and is engaged with the fixing shaft side worm gear 6b. A lower arm rotation side gear 6e is fixed on the rotation shaft 6c sidewise of the second middle arm member 5. A lower arm driven side gear 6f is rotatably disposed sidewise of the upper part of the second middle arm member 5. An endless chain 6g is wound on the rotation side gear 6e and driven side gear 6f. A lower arm double-acting type cylinder 6h of a hydraulic pressure drive type has a cylinder portion disposed at the second middle arm member 5 and has the tip end side of a piston portion fixed on the chain 6g.

By telescopic motions of the lower arm double-acting type cylinder 6h, the chain 6g fixed at the piston portion of the lower arm double-acting type cylinder 6h is caused to rotate, and the lower arm rotation side gear 6e engaged therewith rotates . Thereby, the rotation shaft 6c on which the lower arm rotation side gear 6e is fixed is caused to rotate, and the rotation shaft side worm gear 6d fixed on the rotation shaft 6c rotates . Then, the fixing shaft side worm gear 6b which is in engagement with the rotation shaft side worm gear 6d is caused to rotate. In line therewith, the lower arm member 6 having the fixing shaft side worm gear 6b fixed on the fixing shaft 6a is caused to rotate in the direction of arrow E.

As shown in Fig. 1, Fig. 2, Fig. 7 and Fig. 8, a wrist armmember 7 has a fixing shaft 7a fixed at the upper part thereof, and the fixing shaft 7a is axially supported at the lower part of the lower arm member 6 rotatably in the direction of arrow F. An oval lever portion 7b is fixed on the fixing shaft 7a. A wrist double-acting type cylinder 7c of a hydraulic pressure drive type has a cylinder portion axially supported in the lower arm member 6 and has the tip end side of a piston portion axially supported at the tip end portion of the lever portion 7b.

By telescopic motions of the wrist double-acting type cylinder 7c, the lever portion 7b fixed at the piston portion of the wrist double-acting type cylinder 7c is caused to rotate. In line therewith, the wrist arm member 7 having the lever portion 7b fixed on the fixing shaft 7a is caused to rotate in the direction of arrow F.

As shown in Fig. 1, Fig. 2, Fig. 7 and Fig. 8, a palm arm member 8 has a fixing shaft 8a fixed at the upper part thereof, and the fixing shaft 8a is axially supported at the lower part of the wrist arm member 7 rotatably in the direction of arrow G. An oval lever portion 8b is fixed on the fixing shaft 8a sidewise of the wrist arm member 7. A palm double-acting type cylinder 8c of the hydraulic pressure drive type has a cylinder portion axially supported on the wrist arm member 7 and has the tip end side of a piston portion axially supported at the tip end portion of the lever portion 8b.

By telescopic motions of the palm double-acting type cylinder 8c, the lever portion 8b fixed at the piston portion of the palm double-acting type cylinder 8c is caused to rotate. In line therewith, the palm arm member 8 having the lever portion 8b fixed on the fixing shaft 8a is caused to rotate in the direction of arrow G.

As shown in Fig. 1, Fig. 2, Fig. 7 and Fig. 8, a first finger arm member 9 has an end portion thereof axially supported on a fixing shaft 9a which is fixed at the lower part of the palm arm member 8. A first finger double-acting type cylinder 9b of a hydraulic pressure drive type has a cylinder portion axially supported at the front portion side of the palm arm member 8 and the tip end portion of a piston portion axially supported on the first finger arm member 9.

By telescopic motions of the first finger double-acting type cylinder 9b, the first finger arm member 9 is caused to rotate centering around the fixing shaft 9a.

A second finger arm member 10 has an end portion axially supported on the fixing shaft 9a as in the first finger arm member 9. A second finger double-acting type cylinder 10b of the hydraulic pressure drive type has a cylinder portion axially supported at the rear portion side of the palm arm member 8 and has the tip end portion of a piston portion axially supported on the second finger arm member 10.

By telescopic motions of the second finger double-acting type cylinder 10b, the second finger arm member 10 rotates centering around the fixing shaft 9a.

A sliding plate 11 is disposed on a fixing shaft 11a fixed on the first finger arm member 9 in the forward and backward directions slidably. A sliding plate double-acting type cylinder 11b of the hydraulic pressure drive type has a cylinder portion fixed at the palm arm member 8, and has a piston portion fixed on the sliding plate 11.

A third finger arm member 12 is axially supported on a fixing shaft 12a fixed on the sliding plate 11. A third finger double-acting type cylinder 12b of the hydraulic pressure drive type has a cylinder portion axially supported on the sliding plate 11 and has a piston portion axially supported on the third finger arm member 12.

By telescopic motions of the sliding plate double-acting type cylinder lib, the sliding plate 11 is caused to move forward and backward while being guided by the fixing shaft 11a. On the other hand, by telescopic motions of the third finger double-acting type cylinder 12b, the third finger arm member 12 is caused to rotate centering around the fixing shaft 12a. Therefore, the third finger arm member 12 is able to carry out forward and backward motions and motions in the rotation direction centering around the fixing shaft 12a.

Next, a description is given of a hydraulic circuit by which water is supplied into the above-described respective double-acting type cylinders.

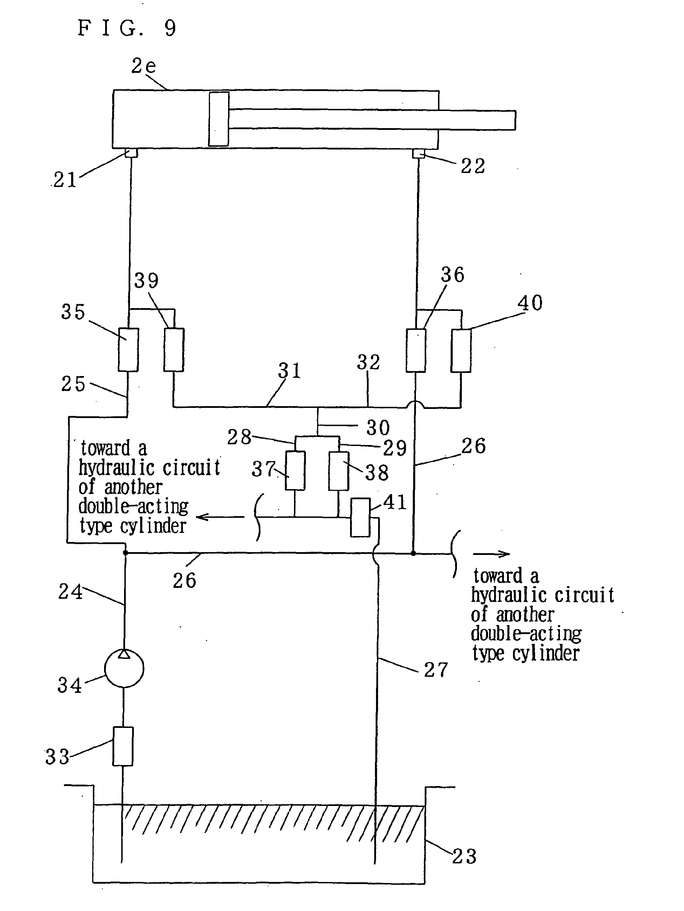

Fig. 9 is a hydraulic circuit diagram of a manipulator according to Embodiment 1 of the invention.

In Fig. 9, reference number 2e denotes a shoulder double-acting type cylinder, which is similar to that shown in Fig. 1 and Fig. 3.

Reference number 21 denotes an extension side port of the shoulder double-acting type cylinder 2e. Reference number 22 denotes a contraction side port of the shoulder double-acting type cylinder 2e. A water tank 23 stores water that is an operating fluid of the shoulder double-acting type cylinder 2e. An outward path 24 has an upstream side opening immersed in the water tank 23. An extension side outward path 25 is caused to communicate with the downstream side of the outward path 24 and the extension side port 21. A contraction side outward path 26 is caused to communicate with the downstream side of the outward path 24 and the contraction side port 22. A return path 27 has a downstream side opening immersed in the water tank 23. A major diameter side return path 28 has a downstream side caused to communicate with the return path 27. A minor diameter side return path 29 has a downstream side thereof caused to communicate with the return path 27 so that the minor diameter side return path is juxtaposed to the major diameter side return path 28. A coupling return path 30 has an upstream side thereof caused to communicate with the downstream sides of the major diameter side return path 28 and minor diameter side return path 29. A contraction side return path 31 is caused to communicate with a prescribed portion of the extension side outward path 25 and the upstream side of the coupling return path 30. An extension side return path 32 is caused to communicate with a prescribed portion of the contraction side outward path 26 and the upstream side of the coupling return path 30. A strainer 33 is disposed at the upstream portion of the outward path 24. A pump 34 is disposed at the downstream side outward path 24 of the strainer 33. An extension side outward path valve 35 is disposed in the extension side outward path 25. A contraction side outward path valve 36 is disposed in the contraction side outward path 26. A major diameter valve 37 is disposed in the major diameter side return path 28. A minor diameter valve 38 whose opening diameter is smaller than that of the major diameter valve 37 is disposed in the minor diameter side return path 29. A contraction side return path valve 39 is disposed in the contraction side return path 31. An extension side return path valve 40 is disposed in the extension side return path 32. A relief valve 41 is disposed in the return path 27 to retain pressure.

With respect to a hydraulic circuit of a manipulator according to Embodiment 1 of the invention, which is thus constructed, a description is given below of a case where the shoulder double-acting type cylinder 2e is caused to extend and a case where the shoulder double-acting type cylinder 2e is caused to contract, with reference to the drawings.

Where the shoulder double-acting type cylinder 2e is caused to extend, in a state where the pump 34 is driven, the extension side outward path valve 35, major diameter valve 37, minor diameter valve 38 and extension side return path valve 40 are opened, and the contraction side return path valve 39 and contraction side outward path valve 36 are closed. Thereby, water in the water tank 23 flows from the extension side port 21 into the shoulder double-acting type cylinder 2e via the outward path 24 and extension side outward path 25, whereby the piston portion is pressed in the extension direction, and water at the piston side is stored in the water tank 23 through the contraction side port 22 via the extension side return path valve 40, major diameter valve 37, minor diameter valve 38, and return path 27. Thereby, the shoulder double-acting type cylinder 2e is caused to extend.

Where the shoulder double-acting type cylinder 2e is caused to contract, the contraction side return path valve 39, contraction side outward path valve 36, major diameter valve 37, and minor diameter valve 38 are opened, and the extension side outward path valve 35 and extension side return path valve 40 are closed. Thereby, water in the water tank 23 flows from the contraction side port 22 into the shoulder double-acting type cylinder 2e via the outward path 24 and contraction side outward path 26, whereby the piston portion is pressed in the contraction direction, and water at the extension side port 21 flows from the extension side port 21 back to the water tank 23 via the contraction side return path 31, coupling return path 30, major diameter side return path 28, and minor diameter side return path 29, and return path 27, whereby the shoulder double-acting type cylinder 2e is caused to contract.

Also, when returning water in the shoulder double-acting type cylinder 2e into the water tank 23, it is not necessary to open the major diameter valve 37 and minor diameter valve 38 at the same time, wherein any one of three patterns may be adequately chosen in accordance with a prescribed flow amount of water, one of which is that only the major diameter valve 37 is opened, another of which is that only the minor diameter valve 38 is opened, and the other of which is that both the valves 37 and 38 are opened.

Also, in Embodiment 1, a description was given of only the hydraulic circuit of the shoulder double-acting type cylinder 2e. However, the other double-acting type cylinders have a hydraulic circuit equivalent to that of the shoulder double-acting type cylinder 2e. The hydraulic circuits of the respective double-acting type cylinders have the return path 27 and contraction side outward path 26 connected to each other.

In addition, a potentiometer is provided in the rotation portion of the manipulator 1 as a method for controlling the respective double-acting type cylinders, wherein such a method is employed, in which a value of the potentiometer is fed back to an operation portion (not illustrated), and extension or contraction of the respective double-acting type cylinders is determined on the basis of a deviation between an instruction value given from the operation portion and the value of the potentiometer.

Further, a servo valve may be used instead of the extension side outward path valve 35, contraction side outward path valve 36, major diameter valve 37, minor diameter valve 3 8, contraction side return path valve 39 and extension side return path valve 40, which are described in Embodiment 1. In particular, where a servo valve is employed instead of the major diameter valve 37 and minor diameter valve 38 for controlling the respective double-acting type cylinders, since it is possible to vary the flow amount of water flowing into the double-acting type cylinders without any step, movement of the arm can be smoothened.

With the manipulator according to Embodiment 1 of the invention, which is thus constructed, the following actions can be brought about.
(1) Since respective double-acting type cylinders are provided with respect to respective arm members, it is possible to independently turn and move the respective arm members, wherein operationality thereof is excellent.
(2) Since the operating fluid of the respective double-acting type cylinders is water, it is difficult for a fire to occur in comparison with an oil hydraulic pressure drive type, wherein safety thereof is excellent.
(3) Since the operating fluid of the respective double-acting type cylinders is water, the ambient environment is not adversely impacted even if any of the operating fluid leaks, and the environment is not contaminated when disposing the operating fluid, wherein safety thereof is excellent.
(4) Since the operating fluid of the respective double-acting type cylinders is water, a greater output can be obtained than that of a pneumatic drive type.

### (Embodiment 2)

A description is given below of a manipulator according to Embodiment 2 of the invention with reference to the accompanying drawings. Also, the manipulator according to Embodiment 2 is the same as that according to Embodiment 1, excepting that a servo valve is employed in the hydraulic circuit instead of the extension side outward path valve, contraction side outward path valve, extension side return path valve, contraction side return path valve, major diameter valve, and minor diameter valve, which are shown in Embodiment 1 described above. Therefore, a description of the construction and motions other than those of the hydraulic circuit is omitted.

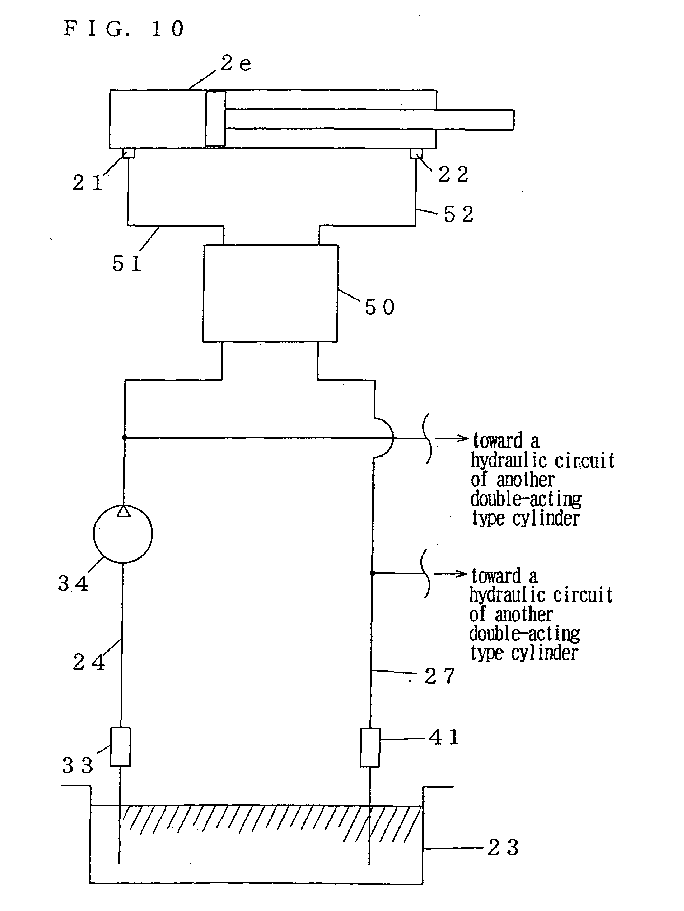

Fig. 10 is a hydraulic circuit diagram of the manipulator according to Embodiment 2 of the invention.

In Fig. 10, reference number 2e denotes a shoulder double-acting type cylinder. Reference number 21 is an extension side port of the shoulder double-acting type cylinder 2e. Reference number 22 denotes a contraction side port of the shoulder double-acting type cylinder 2e. 23 denotes a water tank, 24 denotes an outward path, 27 denotes a return path, 33 denotes a strainer, 34 denotes a pump, and 41 denotes a relief valve. These components are similar to those described with reference to Fig. 9. Reference number 50 denotes a servo valve, 51 denotes an extension path, and 52 denotes a contraction path.

A description is given of motions of the hydraulic circuit of the manipulator according to Embodiment 2 of the invention, which is constructed as described above, with reference to the drawings.

Where the shoulder double-acting type cylinder 2e is caused to extend, the servo valve 50 is driven in a state where the pump 34 is driven, whereby water in the water tank 23 flows into the shoulder double-acting type cylinder 2e through the extension side port 21 via the outward path 24, servo valve 50, and extension path 51. Then, the piston portion is pressed in the extension direction, and water at the piston side is stored from the contraction side port 22 into the water tank 23 via the contraction path 52, servo valve 50, and return path 27, thereby causing the shoulder double-acting type cylinder 2e to extend.

Where the shoulder double-acting type cylinder 2e is caused to contract, the servo valve 50 is driven, whereby water in the water tank 23 flows from the contraction side port 22 into the shoulder double-acting type cylinder 2e through the outward path 24 , servo valve 50, and contraction path 52, whereby the piston is pressed in the contraction direction, and water at the extension side port 21 side returns from the extension side port 21 into the water tank 23 via the extension path 51, servo valve 50, and return path 27, thereby causing the shoulder double-acting type cylinder 2e to contract.

In Embodiment 2, a description was given of only the hydraulic circuit of the shoulder double-acting type cylinder 2e. However, the other double-acting type cylinders have a hydraulic circuit equivalent to that of the shoulder double-acting type cylinder 2e. The hydraulic circuits of the respective double-acting type cylinders have outward path 24 and return path 27 connected to each other.

In addition, a potentiometer is provided in the rotation portion of the manipulator 1 as a method for controlling the respective double-acting type cylinders, wherein such a method is employed, in which a value of the potentiometer is fed back to an operation portion (not illustrated), and extension or contraction of the respective double-acting type cylinders is determined on the basis of a deviation between an instruction value given from the operation portion and the value of the potentiometer.

With the manipulator according to Embodiment 2 of the invention, which is thus constructed, the following actions can be brought about.

(1) Since it is possible to vary the flow amount of water flowing into the shoulder double-acting type cylinder 2e without any step by the servo valve 50, it is possible to cause the shoulder double-acting type cylinder 2e to smoothly extend and contract, wherein movement of the arm can be smoothened.

### INDUSTRIAL APPLICABILITY

As described above, with the manipulator according to the invention, advantageous effects can be brought about as described below.

According to the first aspect of the invention,. the following effects can be obtained.
(1) By telescopic motions of the double-acting type cylinder, the piston portion of the double-acting type cylinder presses and tracts one arm member and the arm member rotates centering around the fixing shaft of the arm member. Therefore, by adjusting the telescopic motion of the double-acting type cylinder, it is possible to adjust the angle of the arm member with respect to another arm member.
(2) Since the operating fluid is water, it is difficult for a fire to occur, and safety is increased in comparison with the oil hydraulic pressure drive type cylinder.
(3) Since the operating fluid is water, water does not adversely impact the peripheral environment even if the operating fluid leaks. Also, where the operating fluid is disposed, it does not contaminate the environment, wherein safety is further increased.
(4) Since the operating fluid is water, a greater output than in a case of the pneumatic drive type can be obtained.

According to the second aspect of the invention, the following effects can be brought about.
(1) By telescopic motions of the double-acting type cylinder, the chain rotates, the rotation side gear which is in engagement therewith rotates, and the fixing shaft having the rotation side gear fixed thereon rotates. In line therewith, since one arm member rotates centering around the fixing shaft, it is possible to adjust the angle of the arm member with respect to another arm member by adjusting the telescopic motion of the double-acting type cylinder.
(2) Since the arm member is caused to rotate via the chain, it is possible to adjust the torque in accordance with the weight of the arm member by adjusting the diameter of the gear.

According to the third aspect of the invention, the following effects can be brought about.
(1) By telescopic motions of the double-acting type cylinder, the chain rotates, the rotation side gear engaged therewith rotates, the rotation shaft having the rotation side gear fixed thereon and the rotation shaft side worm gear fixed on the rotation shaft rotate, the fixing shaft side worm gear engaged with the rotation shaft side worm gear rotates, and the fixing shaft having the fixing shaft side worm gear fixed thereon rotates. In line therewith, since one arm member rotates centering around the fixing shaft, it is possible to adjust the angle of the arm member with respect to another arm member by adjusting the telescopic motion of the double-acting type cylinder.
(2) By adjusting the diameter of the gear since one arm member is caused to rotate via the chain, it is possible to adjust the torque in accordance with the weight of the armmember.
(3) Since one arm member is caused to rotate via the worm gear, a drive force can be transmitted by varying the rotation direction of the chain.

According to the fourth aspect of the invention, the following effects can be brought about in addition to those of the second aspect or the third aspect.
(1) Since the operating fluid is water, it is difficult for a fire to occur, and safety is increased in comparison with the oil hydraulic pressure drive type cylinder.
(2) Since the operating fluid is water, water does not adversely impact the peripheral environment even if the operating fluid leaks. Also, where the operating fluid is disposed, it does not contaminate the environment, wherein safety is further increased.
(3) Since the operating fluid is water, a greater output than in a case of the pneumatic drive type can be obtained.

According to the fifth aspect of the invention, the following effects can be brought about in addition to those of any one of the first aspect through the fourth aspect.
(1) Since the double-acting type cylinder is caused to rotate in accordance with telescopic motions, the distance to the chain and the arm member, at which the piston portion is disposed, can be automatically adjusted, wherein since the locating position of the double-acting type cylinder is not limited, the degree of freedom in designing manipulators can be expanded.

## Claims

1. A manipulator disposed on a supporting structure such as a robot fuselage and a cradle, etc., at a work site in a factory, comprising:
(a) an arm member;
(b) a fixing shaft fixed on said one arm member;
(c) another arm member for axially supporting said fixing shaft; and
(d) adouble-acting hydraulic pressure drive type cylinder in which a cylinder portion is disposed at said one arm member, and a piston portion is disposed at said other arm member, or a double-acting hydraulic pressure drive type cylinder in which a cylinder portion is disposed at said other arm member and a piston portion is disposed at said one arm member.

2. A manipulator disposed on a supporting structure such as a robot fuselage and a cradle, etc., at a work site in a factory, comprising:
(a) an arm member;
(b) a fixing shaft fixed on said one arm member;
(c) another arm member for axially supporting said fixing shaft;
(d) a rotation side gear fixed on the fixing shaft;
(e) a driven side gear rotatably disposed on said one arm member or said other arm member;
(f) an endless chain wound on said rotation side gear and driven side gear; and
(g) a double-acting type cylinder in which a piston portion is fixed on said chain and a cylinder portion is disposed at either said one arm member or said other arm member, where said driven side gear is disposed.

3. A manipulator disposed on a supporting structure such as a robot fuselage and a cradle, etc., at a work site in a factory, comprising:
(a) an arm member;
(b) a fixing shaft fixed on said one arm member;
(c) another arm member for axially supporting said fixing shaft;
(d) a fixing shaft side worm gear fixed on said fixing shaft;
(e) a rotation shaft axially supported perpendicular to the axial line direction of said fixing shaft at said other arm member;
(f) a rotation shaft side worm gear fixed on the rotation shaft and engaged with said fixing shaft side worm gear;
(g) a rotation side gear fixed on said rotation shaft;
(h) a driven side gear rotatably disposed on said other arm member;
(i) an endless chain wound on said rotation side gear and driven side gear; and
( j) a double-acting type cylinder in which a piston portion is fixed on said chain and a cylinder portion is disposed at said other arm member.

4. A manipulator as set forth in Claim 2 or Claim 3, wherein said double-acting type cylinder is of a hydraulic pressure drive type.

5. A manipulator as set forth in any one of Claims 1 through 4, wherein the cylinder portion of said double-acting type cylinder is rotatably disposed at said one arm member or another arm member.
